# EUROPEAN PATENT SPECIFICATION

(11) **EP 3 403 875 B1**
(45) Date of publication and mention of the grant of the patent: **29.01.2020**
(21) Application number: 17171340.7
(22) Date of filing: 16.05.2017
(51) Int. Cl.: B60N 2/28, B60R 21/207

(54) **SEAT PROVIDED WITH A PROTECTION DEVICE**
SITZ MIT EINER SCHUTZVORRICHTUNG
SIÈGE DOTÉ D'UN DISPOSITIF DE PROTECTION

(43) Date of publication of application: 21.11.2018
(73) Proprietor: D-Air Lab S.r.l., 36100 Vicenza (IT)
(72) Inventor: DAINESE, Mr. Lino, 36060 Molvena (Vicenza) (IT)
(74) Representative: Manfrin, Marta

(56) References cited:
- DE-A1- 4 418 028
- US-A- 6 126 194
- US-A1- 2002 047 252
- US-A1- 2015 054 263

## Description

The present disclosure relates to a seat and more particularly to a seat, for example for a car, provided with a protection device for protecting a user. The protection device associated with the seat is an inflatable element and is configured to keep the user, and especially the user's head, as close as possible to the backrest of the seat and provide protection as far as possible against the effects of an impact and/or limit any undesirable movements of the user's head.

Seats, for example car seats, are known where the safety belts are belts provided with inflatable elements.

The inflatable elements are normally enclosed inside the safety belt and come out of a respective seat in the event of need. More particularly, a control unit is configured to detect the data relating to any dangerous situations affecting a user sat on the seat and to send an inflation signal to a device for inflating the inflatable element.

The inflatable element performs a function similar to that of the safety belt. However, owing to the fact that it consists of an inflatable structure, the inflatable element is able to have an extension greater than that of the safety belt and therefore have a larger surface suitable for keeping a user in position. Document US2015/0054263 discloses a car seat for children having air bag elements to hold and protect the head of the occupant in front of the seat back. The gas generator is located behind the seat back whereby a tube is used to supply gas to the front side of the seat.

The author of the present disclosure has noticed that the use of the inflatable devices does not always ensure suitable protection of the user when seated in the correct position inside the vehicle. In fact, the inflatable elements at the moment of inflation tend to create a kind of balloon which expands in front of the user, namely where there is a greater amount of free space available. In other words, the inflatable elements tends to inflate in the forwards direction where there is more free space. This tendency has the risk that a user is exposed to a forwards movement, in particular in the event of a frontal impact or collision from a rear zone. In particular, the user's head may be made to move unexpectedly forwards. The head may in fact be thrown forwards suddenly and this movement may be counteracted only to limited extent by the inflatable element.

Essentially the author of the present disclosure has recognized that often it is not possible to ensure that the user, is fully kept in position on the seat, or that at least his/her head is fully restrained, by means of an inflatable element associated with the seat.

A technical problem forming the basis of the present disclosure consists in designing a seat provided with a protection device which may ensure that the user is held better in the correct position and which preferably prevents sudden movements of the user's head and/or which offers further advantages.

This problem is solved by a seat according to claim 1. Secondary characteristic features of the subject of the present disclosure are defined in the corresponding dependent claims.

According to the present disclosure, the seat is provided with an inflatable element. One portion of the inflatable element, or front inflatable element portion, is located in front of a backrest, so as to provide a protective and/or retaining function for the user, and one portion of the inflatable element, or rear inflatable element portion, is located behind the backrest. The front inflatable element portion and the rear inflatable element portion are in turn preferably adapted to be fixed to a fixed support, such as the backrest, or to another part of the seat, or are adapted to be fixed in a stable position to another support structure of the vehicle.

The backrest is therefore in an intermediate position between the first portion and the second portion of an inflatable element. In this way, by inflating both portions, the inflatable element tends to exert a thrust on both sides of the backrest, namely both on the front side and on the rear side, and consequently to firmly hold/constrain a user who is sat on the seat.

In other words, owing to positioning of an inflatable element portion in front of the backrest and an inflatable element portion behind the backrest, the inflatable element is able to hold in position a user who is sat on the seat. In fact, the inflatable element forms a kind of cage around the backrest and ensures that the user is kept more firmly against the backrest.

Preferably a pressurized gas generator is located behind the backrest so as to be the least hindrance or cause the least bother for a user when the user is sat on the seat. In this way the pressurized gas generator is also visible as little as possible from the exterior, when the seat is situated for example inside a vehicle. The gas may therefore be introduced into the inflatable element from behind the backrest.

More preferably, the front portion and the rear portion may be connected by means of connecting portions which, when the user is in the sat position, are located preferably over the user's shoulders and therefore straddle the top side of the backrest. Basically, the inflatable element is structured so that the inflation fluid passes from the top over the user's shoulders when the user is sat on the seat. This arrangement allows the front portion of the inflatable element to be reached as quickly as possible.

The inflatable element has a portion at the front and a portion at the rear of the backrest so as to provide a single inflatable structure. Consequently, the inflatable element includes a rear portion intended to be located behind the back of the backrest and a front portion intended to be located in front of the backrest. The two portions are connected by two connecting portions which form a cavity or hole for inserting the head. Basically, the two connecting portions define with the front portion and with the rear portion a kind of ring, for inserting the head of a user. In this way, when a user is sat on the chair, or on the seat, one portion of the inflatable element is located in front of the chest and one portion is located behind the backrest, and two connecting portions pass along the sides, in the region of the shoulders. This inflatable element structure has the advantage that it allows the inflation fluid to reach rapidly a front zone, namely a zone of the front portion. Consequently, the user's head may be immediately retained by the front portion in the inflated condition.

Preferably it consists of a single inflatable element.

Moreover, when a user sits on the seat, the inflatable element is substantially put on from above by inserting the head inside the cavity. The front portion is provided with a fastening device for immobilizing and fixing the front portion to the seat.

Preferably, the front portion is divided into two chambers, which are pneumatically connected together. A first chamber is located close to the user's face and therefore closer to the connecting portions and is intended to be inflated first with respect to the remaining chamber of the front portion. The fact that the inflatable element includes the two connecting portions located on the sides of the front portion favours the possibility of rapid expansion and inflation of the first chamber. This first chamber is intended to support the face of a user in the event of an impact. The face in fact tends to be thrown forwards suddenly. This first chamber may be regarded as being an important part of the inflatable element, since it is intended to perform an important supporting function for the user's face in the event of an impact.

The front portion in the deflated condition may be folded up against the user's chest and may then be inflated so as to cover the user's face in the inflated condition.

Further characteristic features and modes of use forming the subject of the present disclosure will become clear from the following detailed description of a number of preferred examples of embodiment thereof, provided by way of a nonlimiting example. It is nevertheless evident how each embodiment may have one or more of the advantages listed above; in any case it is nevertheless not necessary that each embodiment should have simultaneously all the advantages listed.

Reference will now be made to the figures in the attached drawings where:
- Figure 1 shows a rear view of a seat according to an embodiment of the present disclosure;
- Figure 2 shows an axonometric view, from the front, of the embodiment shown in Figure 1;

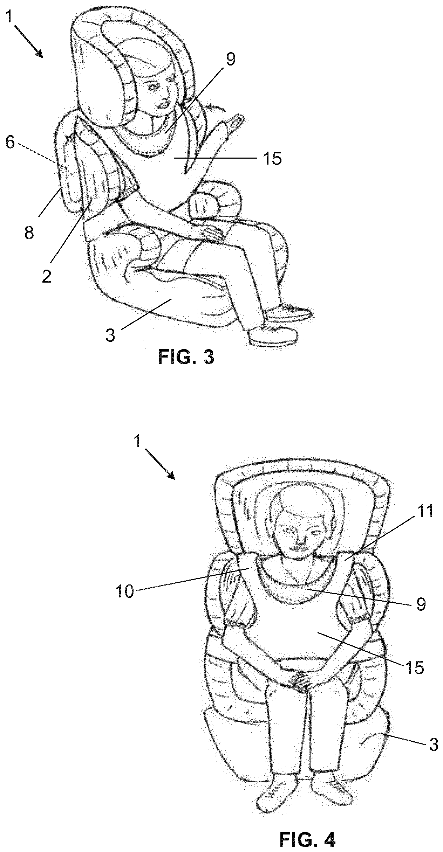

- Figures 3 and 4 show, in schematic form, further views of a seat according to the present disclosure;

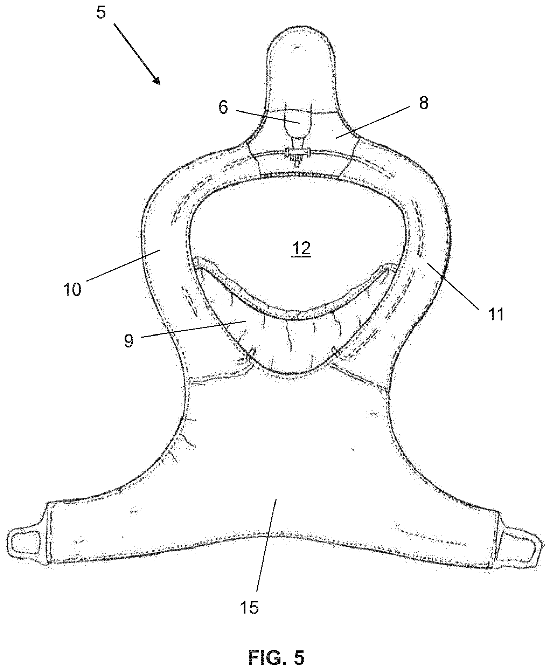

- Figure 5 shows a plan and partially sectioned view of an inflatable element which can be associated with a seat according to the present disclosure.
- Figure 6 shows a view of a seat according to a further embodiment of the present disclosure;
- Figure 7 shows another view of a seat according to the embodiment shown in Figure 6.

With reference to the attached figures, the reference number 1 indicates a seat according to the present disclosure.

The seat 1 includes a backrest 2 and a seat 3. The term "backrest" is understood as meaning a portion of the seat against which the back is intended to rest. The term "seat" is understood as meaning the portion of the seat 1 on which a user is intended to sit. It should also be clarified that the seat 1 is, by definition, intended to support a user who sits and rests with their back against the backrest 2.

Consequently, in the context of the present disclosure, every spatial reference to the seat must be regarded as referring to the user when sat on the seat. Consequently, a rear zone of the backrest must be understood as being a zone which is situated behind the backrest and therefore behind the user's back, and situated opposite to the front zone, being that zone where the user rests with their back. The top zone of the backrest is that directed upwards when a user is in the seated position.

Preferably, in the example shown, the seat 1 is a child seat for use in a car. This seat 1 is, for example, designed to be fixed to the seat in a car or a vehicle by means of a conventional and standard securing system, such as that currently known by the name of ISOFIX. By means of such a system it is possible to fix in a stable manner and in accordance with recognized safety standards, the seat to the body of a car. It is understood, however, that it is also possible for the seat 1 to be car seat for adults.

Alternatively, the seat may be a seat for generic use, for example for means of transport or vehicles. For example, it may consist of a child seat for a bicycle.

The seat 1 includes an inflatable element 5 provided with an inflation device, for example a pressurized gas cylinder. The inflatable element 5 may made using the method described in the international patent application WO 2010-067288 A1 or in the international patent application WO 2016-178143A1.

According to one aspect of the present disclosure, the inflatable element 2 includes a first portion 8 situated behind the backrest and a second portion 9 which is located in front of the backrest 2. The first portion 8 and the portion 9 are able to be fixed to the backrest 2 or to the seat 3 via mechanical fastening means of the known type. More precisely, in the embodiment shown, the first portion 8 is fixed permanently to the rear zone of the backrest 2, while the second portion 9 is fixed by means of fasteners of the removable type to the backrest 2 of the seat, in a zone of the sides. What is important for the present disclosure is that the two portions 8, 9 are stably positioned with respect to the backrest and allow, at the same time, inflation of both a zone in front of the backrest and a zone behind the backrest so as to obtain an effect which confines and restrains the user when the inflatable element is inflated.

More preferably, the inflation device 6 is associated with the first portion 8, for example is located behind the first portion 8, so as to inflate the inflatable element 5 starting from the rear zone and reaching a front zone, passing over the top, for example passing over the shoulders of a user.

Consequently, when the inflatable element is inflated it occupies both a zone which is situated behind the backrest 2 and a zone which is situated in front of the backrest 2. As a result, a user may be confined between these two zones and kept in position against the backrest 2.

Two connecting portions 10, 11 are present between the first portion 8 and the second portion 9. Each connecting portion 10, 11 extends in a straddling or bridge-like manner between the zone behind the backrest and the zone in front of the backrest. The expression "straddling" is understood as meaning that a part of the connecting portion is located in front of the backrest and a part is located behind the backrest, passing over the backrest or through a slit in the backrest.

This connecting portion 10, 11 may also be part of the inflatable element 5 and therefore be inflatable per se. Preferably, in the embodiment shown, the inflatable element 5 is a single inflatable element.

The connecting portions 10, 11 define with the first portion 8 and with the second portion 9 a kind of closed ring with an internal cavity 12 where the user's head is inserted.

In other words, the second portion 9 has the form of a collar or half-collar and, once inflated, forms a single barrier connected respectively on the right-hand side and left-hand side to the first portion 8 by means of the two connecting portions 10, 11.

As a result the second portion 9 is inserted from above over the head of a user. Basically, the second portion 9 is put on from above, with the user's head being inserted inside the cavity. In fact, the first portion 8 remains fixed attached to the rear zone of the seat, and the portion 9 is rotated forwards so as to allow insertion of the head. The presence of the connecting portions 10, 11 allows rapid inflation of the second portion 9.

In order to facilitate inflation, the inflation device may be provided with pipes which introduce gas into the front zone passing through the connecting portions 10, 11 and an outlet directed into the rear zone. By so doing, the connecting portions 10, 11 are inflated after the front zones and rear zones. Alternatively, the connecting portions 10, 11 may be belts provided with pipes inside them for passage of the inflation gas.

It is understood that the inflatable element may be lined or covered with a fabric or other soft material suitable for use on a fabric. Alternatively, the inflatable element may be housed inside a casing having a shape corresponding to that of the inflatable element.

Preferably, the portion 9 extends only over the top zone of the user's chest and is intended to create, when inflated, a barrier in front of the user's face. Owing to this position, the portion 9 may effectively oppose sudden undesirable movements of the head forwards and prevent for example whiplash effects.

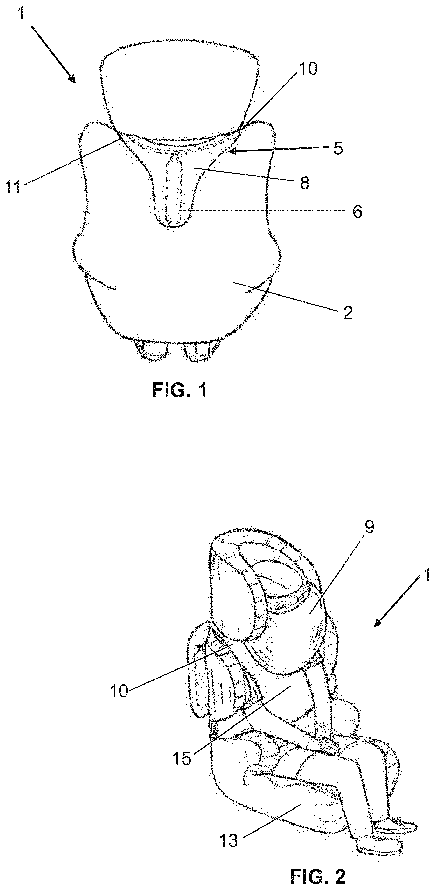

The second portion 9 may be folded up in a deflated condition. For example, the second portion 9 may be formed pleated, namely comprise a plurality of folds, or may be included in a casing which is pleated or folded up onto itself. Preferably, when the inflatable element 5 is in the rest condition, the folds are stably fixed by means of stitching with threads having a calibrated breaking tension and the second portion is substantially collapsed, occupying a minimum amount of space in relation to the user. When the inflatable element 5 expands into the inflated condition (Figure 2) said stitches break and the second portion 9 extends, making use of the greater extension to form the aforementioned barrier. In other words, these stitches are suitably calibrated to break during inflation so as to allow expansion of the inflatable element 5.

Alternatively it is possible to use a casing which receives the inflatable element and elastic zones inside the casing which expand when the bag inflates.

Even more preferably, in the embodiment shown in the drawings, the second portion 9 is fixed as a single body to a body structure or bib 15 which is intended to act as a safety belt for the user.

The body structure or bib 15 therefore forms one piece with the second portion 9 of the inflatable element 5 and is therefore also lowered from above. The body structure 15 may be stitched to the portion 9 of the inflatable element.

The body structure or bib 15 is provided with fastening elements for fixing all of the protection device to the seat or to the backrest.

The fastening elements are of the known type.

In one embodiment, not visible in the drawings, the body structure or bib 15 is also of the inflatable type and forms a single chamber with the second portion 9. Basically all of the bib 15 may be inflated. Preferably, in this latter case, the body structure or bib 15 may have a different height in a top zone closer to the face and a bottom zone closer to the abdomen. In order to obtain a bag with different heights the technology for making bags with threads described in the aforementioned international patent application may be used. The connecting portions 10, 11 may also be made with different heights in relation to the remainder of the inflatable element 5.

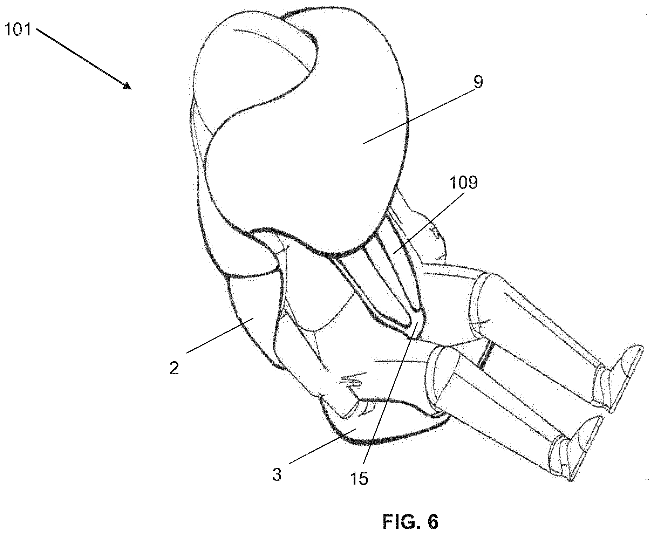

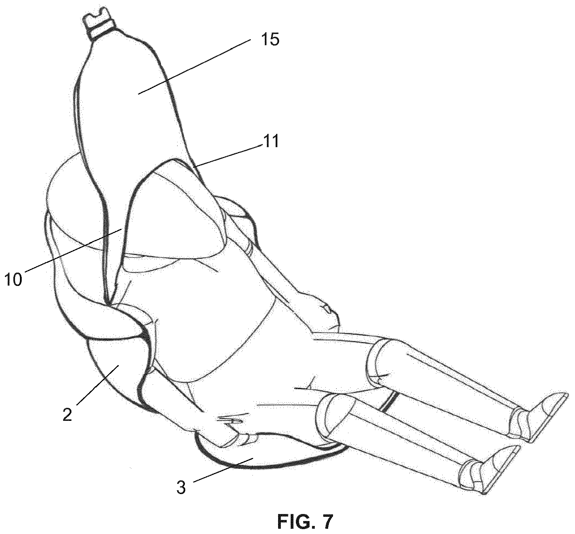

A seat in accordance with a further embodiment is shown in Figures 6 and 7 and is indicated by the reference number 101. In this embodiment, elements which have the same function keep the same reference number. In the embodiment shown in Figures 6 and 7, the second portion forms a first inflation chamber. The bib 15 includes a second chamber 109 connected pneumatically to the second portion 9 (first chamber) and is intended to inflate after the second portion 9. The second chamber 109 is connected to the second portion 9 by means of suitable calibrated holes (not visible in the drawings) and is able to receive the inflation fluid after the second portion 9. As an alternative to the calibrated holes, valves for adjusting the through-flow of the inflation fluid may be provided. As a further alternative the second chamber 109 is completely isolated from the second portion 9 and different ducts for introducing the inflation fluid are provided.

In this way, at the moment of impact, the inflation fluid is emitted from the rear zone and immediately reaches the second portion 9 which inflates, covering the user's face completely. Then the second chamber 109 is inflated. The second chamber 109 takes the form of two straps which pass over the user's chest and serve to give rigidity to the whole system and keep the user in a stable position.

It is pointed out that, in order to improve further retention of the user, fixing elements in the form of a belt or the like may be provided for the legs.

In order to perform inflation of the inflatable element 5, the seat 1 according to the present invention is designed to cooperate with suitable activation and inflation means; of these the compressed gas cylinder 6 which is housed in the inflatable element 5 is shown in the figures solely by way of example.

Alternatively, these means comprise gas generators of the pyrotechnical or hybrid type or other types known according to the state of the art.

Said inflation means are controlled by a control unit depending on detection of the state of the vehicle; for example said control unit may implement a system for predicting the impact which allows early identification of the event and a reliable prediction of this event by means of sensors and a unit for processing the signals produced by the said sensors.

Alternatively the aforementioned activation and inflation means may also be integrated in the protection device according to the present invention or located on the outside thereof.

Basically, it may be understood that the means for detecting the impact and activating the inflatable element may be both means associated with the vehicle in which the seat is located, and therefore dependent on the electronics of the vehicle, or means independent of the seat. The seat may therefore both depend on detection of the impact which affects the vehicle and also have independent detection and activation means designed for the seat alone.

It should also be noted that the activation modes, although being an aspect of particular importance for effective operation of the device, will not be further described in greater detail since they are methods which are essentially already known to a person skilled in the art.

The protection device may also comprise a deflation valve communicating on the one hand with the internal chamber of the inflatable element and on the other hand with the external environment, in order to allow the deflation of the inflatable element 5 following activation and when a protective action is no longer required. The activation of the deflation valve may be controlled by an electronic control unit, which opens the deflation valve when a predefined time period has lapsed from activation of the inflation means.

The subject-matter of the present disclosure has been described hitherto with reference to preferred embodiments thereof. It is to be understood that other embodiments relating to the same inventive idea may exist, all of these falling within the scope of protection of the claims which are attached below.

## Claims

1. Seat (1) including a backrest (2) and at least one inflatable element (5), wherein the inflatable element (2) includes a first portion (8) located behind the backrest (2) and a second portion (9) which is located in front of the backrest (2), and wherein said first portion (8) and said second portion (9) are adapted to assume a deflated condition and an inflated condition, and wherein the inflatable element (5) comprises two connecting portions (10, 11) arranged between the first portion (8) and the second portion (9) and wherein the two connecting portions (10, 11) define an annular structure with the first portion (8) and the second portion (9), said annular structure having a cavity (12) suitable for the insertion of a user's head.

2. Seat (1) according to claim 1, comprising an inflation device (6) connected to the inflatable element (5).

3. Seat (1) according to claim 2, wherein the inflation device (6) is associated with the first portion (8) so as to introduce gas from behind the backrest (2).

4. Seat (1) according to any one of the preceding claims, wherein the connecting portions (10, 11) extend in a straddling or bridge-like manner between the area behind the backrest and the area in front of the backrest.

5. Seat (1) according to claim 4, wherein the connecting portions (10, 11) are part of the inflatable element (5) and constitute per se an inflatable structure.

6. Seat (1) according to any one of the preceding claims, wherein the inflatable element (5) is a single inflatable element.

7. Seat (1) according to any one of the preceding claims, the second portion (9) being shaped as a portion of a collar and intended to form a barrier in the inflated condition, wherein second portion (9) is connected respectively on a right-hand side and on a left-hand side to the first portion (8) by means of the two connecting portions (10).

8. Seat (1) according to any one of the preceding claims, wherein the second portion (9) is adapted to be inserted from above over the head of a user.

9. Seat (1) according to any one of the preceding claims, including a body structure or bib (15) intended to act as a safety belt for the user.

10. Seat (1) according to any one of the preceding claims, wherein the body structure or bib (15) forms one piece with the second portion (9) of the inflatable element (5).

11. Seat (1) according to any one of the preceding claims, wherein said seat is a child seat.

12. Seat (1) according to any one of the preceding claims, wherein said seat is a car seat, or a seat for a means of transport or vehicle.

13. Seat (1) according to any one of the preceding claims, wherein said first portion (8) and said second portion (9) are firmly fixed to respective zones of the seat (1).

## Patentansprüche

1. Sitz (1) mit einer Rückenlehne (2) und mindestens einem aufblasbaren Element (5), wobei das aufblasbare Element (2) einen ersten Abschnitt (8), der sich hinter der Rückenlehne (2) befindet, und einen zweiten Abschnitt (9), der sich vor der Rückenlehne (2) befindet, beinhaltet, und wobei der erste Abschnitt (8) und der zweite Abschnitt (9) angepasst sind, um einen entleerten Zustand und einen aufgeblasenen Zustand anzunehmen, und wobei das aufblasbare Element (5) zwei Verbindungsabschnitte (10, 11) umfasst, die zwischen dem ersten Abschnitt (8) und dem zweiten Abschnitt (9) angeordnet sind, und wobei die beiden Verbindungsabschnitte (10, 11) eine ringförmige Struktur mit dem ersten Abschnitt (8) und dem zweiten Abschnitt (9) definieren, wobei die ringförmige Struktur einen Hohlraum (12) aufweist, der zum Einfügen des Kopfes eines Benutzers geeignet ist.

2. Sitz (1) gemäß Anspruch 1, umfassend eine Aufblasvorrichtung (6), die mit dem aufblasbaren Element (5) verbunden ist.

3. Sitz (1) gemäß Anspruch 2, wobei die Aufblasvorrichtung (6) dem ersten Abschnitt (8) zugeordnet ist, um Gas von hinter der Rückenlehne (2) einzuführen.

4. Sitz (1) gemäß einem der vorstehenden Ansprüche, wobei sich die Verbindungsabschnitte (10, 11) überspannend oder brückenartig zwischen dem Bereich hinter der Rückenlehne und dem Bereich vor der Rückenlehne erstrecken.

5. Sitz (1) gemäß Anspruch 4, wobei die Verbindungsabschnitte (10, 11) Teil des aufblasbaren Elements (5) sind und an sich eine aufblasbare Struktur bilden.

6. Sitz (1) gemäß einem der vorstehenden Ansprüche, wobei das aufblasbare Element (5) ein einzelnes aufblasbares Element ist.

7. Sitz (1) gemäß einem der vorstehenden Ansprüche, wobei der zweite Abschnitt (9) als Abschnitt eines Kragens ausgebildet ist und dazu bestimmt ist, im aufgeblasenen Zustand eine Barriere zu bilden, wobei der zweite Abschnitt (9) jeweils auf einer rechten Seite und auf einer linken Seite mit dem ersten Abschnitt (8) über die beiden Verbindungsabschnitte (10) verbunden ist.

8. Sitz (1) gemäß einem der vorstehenden Ansprüche, wobei der zweite Abschnitt (9) zur Einführung von oben über den Kopf eines Benutzers angepasst ist.

9. Sitz (1) gemäß einem der vorstehenden Ansprüche, der beinhaltet: Eine Körperstruktur oder einen Latz (15), die oder der dazu bestimmt ist, als Sicherheitsgurt für den Benutzer zu dienen.

10. Sitz (1) gemäß einem der vorstehenden Ansprüche, wobei die Körperstruktur oder der Latz (15) mit dem zweiten Abschnitt (9) des aufblasbaren Elements (5) einteilig ausgebildet ist.

11. Sitz (1) gemäß einem der vorstehenden Ansprüche, wobei der Sitz ein Kindersitz ist.

12. Sitz (1) gemäß einem der vorstehenden Ansprüche, wobei der Sitz ein Autositz oder ein Sitz für ein Transportmittel oder Fahrzeug ist.

13. Sitz (1) gemäß einem der vorhergehenden Ansprüche, wobei der erste Abschnitt (8) und der zweite Abschnitt (9) fest mit den jeweiligen Zonen des Sitzes (1) verbunden sind.

## Revendications

1. Siège (1) comprenant un dossier (2) et au moins un élément gonflable (5), dans lequel l'élément gonflable (5) comprend une première partie (8) positionnée derrière le dossier (2) et une seconde partie (9) qui est positionnée en face du dossier (2), et dans lequel ladite première partie (8) et ladite seconde partie (9) sont adaptées pour adopter une condition dégonflée et une position gonflée, et dans lequel l'élément gonflable (5) comprend deux parties de raccordement (10, 11) agencées entre la première partie (8) et la seconde partie (9) et dans lequel les deux parties de raccordement (10, 11) définissent une structure annulaire avec la première partie (8) et la seconde partie (9), ladite structure annulaire ayant une cavité (12) appropriée pour l'insertion de la tête d'un utilisateur.

2. Siège (1) selon la revendication 1, comprenant un dispositif de gonflage (6) raccordé à l'élément gonflable (5).

3. Siège (1) selon la revendication 2, dans lequel le dispositif de gonflage (6) est associé à la première partie (8) afin d'introduire du gaz depuis l'arrière du dossier (2).

4. Siège (1) selon l'une quelconque des revendications précédentes, dans lequel les parties de raccordement (10, 11) s'étendent en étant à cheval ou en faisant office de pont entre la zone derrière le dossier et la zone en face du dossier.

5. Siège (1) selon la revendication 4, dans lequel les parties de raccordement (10, 11) font partie de l'élément gonflable (5) et constituent en soi une structure gonflable.

6. Siège (1) selon l'une quelconque des revendications précédentes, dans lequel l'élément gonflable (5) est un élément gonflable unique.

7. Siège (1) selon l'une quelconque des revendications précédentes, la seconde partie (9) étant formée comme une partie d'un collier et prévue pour former une barrière dans la condition gonflée, dans lequel la seconde partie (9) est raccordée respectivement du côté droit et du côté gauche, à la première partie (8) au moyen des deux parties de raccordement (10).

8. Siège (1) selon l'une quelconque des revendications précédentes, dans lequel la seconde partie (9) est adaptée pour être insérée depuis le dessus sur la tête d'un utilisateur.

9. Siège (1) selon l'une quelconque des revendications précédentes, comprenant une structure de corps ou un plastron (15) prévu(e) pour servir de ceinture de sécurité pour l'utilisateur.

10. Siège (1) selon l'une quelconque des revendications précédentes, dans lequel la structure de corps ou le plastron (15) forme un seul tenant avec la seconde partie (9) de l'élément gonflable (5).

11. Siège (1) selon l'une quelconque des revendications précédentes, dans lequel ledit siège est un siège d'enfant.

12. Siège (1) selon l'une quelconque des revendications précédentes, dans lequel ledit siège est un siège auto ou un siège pour un moyen de transport ou un véhicule.

13. Siège (1) selon l'une quelconque des revendications précédentes, dans lequel ladite première partie (8) et ladite seconde partie (9) sont fermement fixées aux zones respectives du siège (1).
